# EUROPEAN PATENT APPLICATION

(11) **EP 4 497 765 A1**
(43) Date of publication of application: **29.01.2025**
(21) Application number: 23784520.1
(22) Date of filing: 07.02.2023
(51) Int. Cl.: C08F 220/22, C08F 220/18, C08L 33/16, C09K 3/18, D06M 15/277

(54) **FLUORINE-CONTAINING POLYMER AND FLUORINE-CONTAINING COMPOSITION**

(30) Priority: 06.04.2022 JP 2022063496
(71) Applicant: DAIKIN INDUSTRIES, LTD., Osaka-shi, Osaka 530-0001 (JP)
(72) Inventor: MINAMI, Shinichi, Osaka-Shi, Osaka 530-0001 (JP); ENOMOTO, Takashi, Osaka-Shi, Osaka 530-0001 (JP); FUKUMORI, Masaki, Osaka-Shi, Osaka 530-0001 (JP)
(74) Representative: Hoffmann Eitle
(86) International application number: PCT/JP2023/004012
(87) International publication number: WO 2023/195225

(57) **Abstract**

Provided are a fluorine-containing polymer and a fluorine-containing composition that impart exceptional dynamic water repellency at a low concentration and exceptional water repellency during use as an auxiliary agent. According to the present disclosure, it is possible to impart exceptional dynamic water repellency at a low concentration and exceptional water repellency during use as an auxiliary agent by using a fluorine-containing polymer having repeating units formed from (a) a first fluorine-containing acrylic monomer having a chlorine atom at the α position, (b) a second fluorine-containing acrylic monomer having a hydrogen atom or an organic group at the α position, (c) a first acrylic monomer having a C12-40 linear hydrocarbon group, and (d) a second acrylic monomer having a C3-40 cyclic hydrocarbon group, or by using a fluorine-containing composition containing said polymer.

## Description

### Technical Field

The present disclosure relates to a fluorine-containing polymer and a fluorine-containing composition. The fluorine-containing composition can be used as a surface-treating agent.

### Background Art

Conventionally, various fluorine-containing compounds have been proposed. The fluorine-containing compounds are advantageously excellent in characteristics such as heat resistance, oxidation resistance, and weather resistance. The fluorine-containing compounds are used, for example, as a water- and oil-repellent agent and a soil resistant agent, taking advantage of its low free energy, or in other words, its characteristic less adhesiveness.

Patent Literature 1 (WO2018/084132) discloses that a fluorine-containing polymer formed of two different types of fluorine-containing monomers provides excellent washing durability and water- and oil-repellency.

Patent Literature 2 (JP2016-196651A) discloses that a fluorine-containing polymer formed of a fluorine-containing monomer and a monomer having a high glass transition point provides excellent water- and oil-repellency and inhibits adhesion to rolls upon processing.

### Citation List

### Patent Literature

Patent Literature 1: WO2018/084132
Patent Literature 2: JP2016-196651A

### Summary of Invention

### Technical Problem

Patent Literature 1 and Patent Literature 2 are silent about dynamic water-repellency at low concentration, or water-repellency upon use with an auxiliary agent.

An object of the present disclosure is to provide excellent dynamic water-repellency at low concentration, and excellent water-repellency upon use with an auxiliary agent.

In the present disclosure, the term "auxiliary agent" refers to a curing agent (4) and other component (5) (for example, fluorine-free water-repellent compounds and/or an additives).

### Solution to Problem

The present disclosure provides a fluorine-containing composition comprising
(1) a fluorine-containing polymer, and
(2) a liquid medium.

The present disclosure provides a fluorine-containing polymer having repeating units formed of
(a) a first monomer that is a fluorine-containing acrylic monomer having a chlorine atom at the α-position,
(b) a second monomer that is a fluorine-containing acrylic monomer having a hydrogen atom or an organic group at the α-position,
(c) a third monomer that is an acrylic monomer having a chain hydrocarbon group having 12 to 40 carbon atoms, and
(d) a fourth monomer that is an acrylic monomer having a cyclic hydrocarbon group having 3 to 40 carbon atoms.

The preferred embodiment of the present disclosure is as follows.

### Embodiment 1:

A fluorine-containing polymer, having repeating units formed of
(a) a first monomer that is a fluorine-containing acrylic monomer having a chlorine atom at the α-position,
(b) a second monomer that is a fluorine-containing acrylic monomer having a hydrogen atom or an organic group at the α-position,
(c) a third monomer that is an acrylic monomer having a chain hydrocarbon group having 12 to 40 carbon atoms, and
(d) a fourth monomer that is an acrylic monomer having a cyclic hydrocarbon group having 3 to 40 carbon atoms.

### Embodiment 2:

The fluorine-containing polymer according to embodiment 1, wherein a weight ratio between the third monomer (a) and the fourth monomer (b) is 5:95 to 95:5.

### Embodiment 3:

The fluorine-containing polymer according to embodiment 1 or 2, wherein
the first monomer (a) is a compound represented by the formula:

   CH₂=C(-X¹¹)-C(=O)-Y¹¹-Z¹¹-Rf¹¹
wherein X¹¹ is a halogen atom,
Y¹¹ is -O- or -NH-,
Z¹¹ is a direct bond or a divalent organic group, and
Rf¹¹ is a fluoroalkyl group having 1 to 20 carbon atoms, the second monomer (b) is a compound represented by the formula:

   CH₂=C(-X¹²)-C (=O)-Y¹²-Z¹²-Rf¹²
wherein X¹² is a hydrogen atom or a monovalent organic group,
Y¹² is -O- or -NH-,
Z¹² is a direct bond or a divalent organic group, and
Rf¹² is a fluoroalkyl group having 1 to 20 carbon atoms,
   the third monomer (c) is a compound represented by the formula:

   CH₂=C(-X²¹)-C (=O)-Y²¹-R²¹
wherein X²¹ is a hydrogen atom, a monovalent organic group or a halogen atom,
Y²¹ is -O- or -NH-, and
Rf²¹ is a chain hydrocarbon group having 12 to 40 carbon atoms, and
   the fourth monomer (d) is a compound represented by the formula:

   CH₂=C(-X²²)-C(=O)-Y²²-R²²
wherein X²² is a hydrogen atom, a monovalent organic group or a halogen atom,
Y²² is -O- or -NH-, and
R²² is a cyclic hydrocarbon group having 3 to 40 carbon atoms.

### Embodiment 4:

The fluorine-containing polymer according to any one of embodiments 1 to 3, wherein
the monovalent organic group is an alkyl group having 1 to 4 carbon atoms,
the divalent organic group is a linear or branched alkylene group having 1 to 20 carbon atoms, and
the cyclic hydrocarbon group having 3 to 40 carbon atoms is a cyclic aliphatic group having 4 to 30 carbon atoms, an aromatic group having 6 to 20 carbon atoms, or an aromatic aliphatic group having 7 to 25 carbon atoms.

### Embodiment 5:

The fluorine-containing polymer according to any one of embodiments 1 to 4, wherein
the third monomer (c) is at least one long chain acrylate ester monomer selected from the group consisting of lauryl (meth)acrylate, cetyl (meth)acrylate, stearyl (meth)acrylate, icosyl (meth)acrylate, behenyl (meth)acrylate, lauryl α-chloroacrylate, cetyl α-chloroacrylate, stearyl α-chloroacrylate, icosyl α-chloroacrylate, and behenyl α-chloroacrylate, or
at least one long chain acrylamide monomer selected from the group consisting of lauryl (meth)acrylamide, cetyl (meth)acrylamide, stearyl (meth)acrylamide, icosyl (meth)acrylamide, and behenyl (meth)acrylamide, and
the fourth monomer (d) is at least one compound selected from the group consisting of cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate and 2-ethyl-2-adamantyl (meth)acrylate.

### Embodiment 6:

The fluorine-containing polymer according to any one of embodiments 1 to 5, wherein an amount of the first monomer (a) is 5 to 70% by weight, an amount of the second monomer (b) is 4 to 60% by weight, an amount of the third monomer (c) is 3 to 60% by weight, and an amount of the fourth monomer (d) is 3 to 60% by weight, relative to the fluorine-containing polymer.

### Embodiment 7:

The fluorine-containing polymer according to any one of embodiments 1 to 6, wherein
the fluorine-containing polymer has a repeating unit formed of (e) other monomer than the monomers (a), (b), (c) or (d), and
the other monomer (e) is a halogenated olefin.

### Embodiment 8:

The fluorine-containing polymer according to embodiment 7, wherein an amount of the other monomer (e) is 0 to 50% by weight.

### Embodiment 9:

A fluorine-containing composition, comprising
(1) the fluorine-containing polymer according to any one of embodiments 1 to 8, and
(2) a liquid medium.

### Embodiment 10:

The fluorine-containing composition according to embodiment 9, wherein the liquid medium (2) is an organic solvent, or water, an organic solvent or a mixture of water and an organic solvent.

### Embodiment 11:

The fluorine-containing composition according to embodiment 9 or 10, wherein the fluorine-containing composition is an aqueous dispersion in which the polymer is dispersed in water or a mixture of water and an organic solvent, and
the fluorine-containing composition comprises (3) a surfactant.

### Embodiment 12:

The fluorine-containing composition according to any one of embodiments 9 to 11, wherein the fluorine-containing composition is a water-repellent agent, an oil-repellent agent, a soil resistant agent, a soil release agent, a release agent, or a mold release agent.

### Embodiment 13:

A treated object, wherein the fluorine-containing polymer according to any one of embodiments 1 to 8 is adhered thereto.

### Advantageous Effects of Invention

According to the present disclosure, a fluorine-containing polymer and a fluorine-containing composition can be obtained that impart excellent dynamic water-repellency at low concentration and excellent water-repellency upon use with an auxiliary agent.

### Description of Embodiments

The fluorine-containing composition includes
(1) a fluorine-containing polymer,
(2) a liquid medium, and
(3) a surfactant.

The fluorine-containing composition may further include
(4) a curing agent.

The fluorine-containing composition may further include (5) other components.

### (1) Fluorine-containing polymer

The fluorine-containing polymer has repeating units derived from a fluorine-containing monomer and a fluorine-free monomer. The fluorine-containing monomer contains (a) the first monomer that is a fluorine-containing acrylic monomer having a chlorine atom at the α-position, and (b) the second monomer that is a fluorine-containing acrylic monomer having a hydrogen atom or an organic group at the α-position. The fluorine-free monomer contains (c) the third monomer that is an acrylic monomer having a chain hydrocarbon group having 12 to 40 carbon atoms, and (d) the fourth monomer that is an acrylic monomer having a cyclic hydrocarbon group having 3 to 40 carbon atoms.

The fluorine-containing polymer may be formed of the monomers (a), (b), (c) and (d) together with (e) other monomer. The other monomer (e) is, for example, a halogenated olefin.

### (a) First monomer

The first monomer (a) is a fluorine-containing monomer.

The first monomer (a) is preferably a compound represented by the formula:

CH₂=C(-X¹¹)-C(=O)-Y¹¹-Z¹¹-Rf¹¹

wherein X¹¹ is a halogen atom,
Y¹¹ is -O- or -NH-,
Z¹¹ is a direct bond or a divalent organic group, and
Rf¹¹ is a fluoroalkyl group having 1 to 20 carbon atoms.

X¹¹ is preferably a fluorine atom, a chlorine atom, a bromine atom or an iodine atom. Representative examples of X¹¹ are Cl, Br, I and F, and X¹¹ is preferably Cl.

The first monomer (a) is a fluorine-containing acrylate ester monomer in which Y¹¹ is -O-, or a fluorine-containing acrylamide monomer in which Y¹¹ is -NH-. Y¹¹ is preferably -O-.

Examples of Z¹¹ include a direct bond, an aliphatic group having 1 to 10 carbon atoms, an aromatic or cyclic aliphatic group having 6 to 18 carbon atoms,
a group represented by the formula -R²(R¹)N-SO₂- or - R²(R¹)N-CO- wherein R¹ is an alkyl group having 1 to 10 carbon atoms, and R² is a linear alkylene or branched alkylene group having 1 to 10 carbon atoms,
a group represented by the formula -CH₂CH(OR³)CH₂-(Ar-O)ₚ- wherein R³ is a hydrogen atom or an acyl group having 1 to 10 carbon atoms (for example, such as a formyl group or an acetyl group), Ar is an arylene group optionally having a substituent, and p represents 0 or 1,
a group represented by the formula -(CH₂)ᵣ-Ar-(O)_{q}- wherein Ar is an arylene group optionally having a substituent, q is 0 or 1, and r is 0 to 10, or
a group represented by the formula -(CH₂)ₘ-SO₂-(CH₂)ₙ- or-(CH₂)ₘ-S-(CH₂)ₙ- wherein m is 1 to 10, and n is 0 to 10. The aliphatic group is preferably an alkylene group (particularly having 1 to 4 carbon atoms, for example, 1 or 2). The aromatic group or cyclic aliphatic group may be substituted or unsubstituted. The S group or SO₂ group may be directly bonded to the Rf¹¹ group.

In the monomer (a), the Rf¹¹ group is preferably a perfluoroalkyl group. The number of carbon atoms in the Rf¹¹ group is 1 to 12, for example 1 to 6, especially 4 to 6, and further preferably 6. Examples of the Rf¹¹ group are -CF₃, -CF₂CF₃, -CF₂CF₂CF₃, -CF (CF₃)₂, -CF₂CF₂CF₂CF₃,-CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃, -(CF₂)₃CF(CF₃)₂,-(CF₂)₄CF(CF₃)₂, -C₈F₁₇, etc.

Specific examples of the monomer (a) include, but not limited to, the following compounds:

CH₂=C(-Cl)-C(=O)-O-(CH₂)₂-Rf¹¹

CH₂=C(=F)-C(=O)-O-(CH₂)₂-S-Rf¹¹

CH₂=C(-F)-C(=O)-O-(CH₂)₂-S-(CH₂)₂-Rf

CH₂=C(-F)-C(=O)-O-(CH₂)₂-SO₂-Rf¹¹

CH₂=C(-F)-C(=O)-O-(CH₂)₂-SO₂-(CH₂)₂-Rf

CH₂=C(-F)-C(=O)-NH-(CH₂)₂-Rf¹¹

CH₂=C(-Cl)-C(=O)-O-(CH₂)₂-S-Rf¹¹

CH₂=C(-Cl)-C(=O)-O-(CH₂)₂-S-(CH₂)₂-Rf¹¹

CH₂=C(-Cl)-C(=O)-O-(CH₂)₂-SO₂-Rf¹¹

CH₂=C(-Cl)-C(=O)-O-(CH₂)₂-SO₂-(CH₂)₂-Rf¹¹

CH₂=C(-Cl)-C(=O)-NH-(CH₂)₂-Rf¹¹

CH₂=C(-F)-C(=O)-O-(CH₂)₃-S-Rf¹¹

CH₂=C(-F)-C(=O)-O-(CH₂)₃-S-(CH₂)₂-Rf¹¹

CH₂=C(-F)-C(=O)-O-(CH₂)₃-SO₂-Rf¹¹

CH₂=C(-F)-C(=O)-O-(CH₂)₃-SO₂-(CH₂)₂-Rf¹¹

CH₂=C(-F)-C(=O)-NH-(CH₂)₃-Rf¹¹

CH₂=C(-Cl)-C(=O)-O-(CH₂)₃-S-Rf¹¹

CH₂=C(-Cl)-C(=O)-O-(CH₂)₃-S-(CH₂)₂-Rf¹¹

CH₂=C(-Cl)-C(=O)-O-(CH₂)₃-SO₂-Rf¹¹

CH₂=C(-Cl)-C(=O)-O-(CH₂)₃-SO₂-(CH₂)₂-Rf¹¹

### (b) Second monomer

The second monomer (b) is a fluorine-containing monomer.

The second monomer (b) is preferably a compound represented by the formula:

CH₂=C(-X¹²)-C(=O)-Y¹²-Z¹²-Rf¹²

wherein X¹² is a hydrogen atom or a monovalent organic group,
Y¹² is -O- or -NH-,
Z¹² is a direct bond or a divalent organic group, and
Rf¹² is a fluoroalkyl group having 1 to 20 carbon atoms.

X¹² is preferably a hydrogen atom or a linear or branched alkyl group having 1 to 21 carbon atoms. Representative examples of X¹² are a hydrogen atom and a methyl group. A hydrogen atom is particularly preferred.

The first monomer (a) is a fluorine-containing acrylate ester monomer in which Y¹² is -O-, or a fluorine-containing acrylamide monomer in which Y¹² is -NH-. Y¹² is preferably -O-.

Examples of Z¹² include a direct bond, an aliphatic group having 1 to 10 carbon atoms, an aromatic or cyclic aliphatic group having 6 to 18 carbon atoms, a group represented by the formula -R²(R¹)N-SO₂- or -R²(R¹)N-CO- wherein R¹ is an alkyl group having 1 to 10 carbon atoms, and R² is a linear alkylene or branched alkylene group having 1 to 10 carbon atoms, or a group represented by the formula -CH₂CH(OR³)CH₂-(Ar-O)ₚ- wherein R³ is a hydrogen atom or an acyl group having 1 to 10 carbon atoms (for example, such as a formyl group or an acetyl group), Ar is an arylene group optionally having a substituent, and p represents 0 or 1, or a group represented by the formula -(CH₂)ₙ-Ar-(O)_{q}- wherein Ar is an arylene group optionally having a substituent, and q is 0 or 1, or a -(CH₂)ₘ-SO₂-(CH₂)ₙ- group or a -(CH₂)ₘ-S-(CH₂)ₙ- group, provided that m is 1 to 10, and n is 0 to 10. The aliphatic group is preferably an alkylene group (particularly having 1 to 4 carbon atoms, for example, 1 or 2). The aromatic group or cyclic aliphatic group may be substituted or unsubstituted. The S group or SO₂ group may be directly bonded to the Rf¹² group.

In the monomer (b), the Rf¹² group is preferably a perfluoroalkyl group. The number of carbon atoms in the Rf¹² group is 1 to 12, for example 1 to 6, especially 4 to 6, and further preferably 6. Examples of the Rf¹² group are -CF₃, -CF₂CF₃, -CF₂CF₂CF₃, -CF(CF₃)₂, -CF₂CF₂CF₂CF₃,-CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃, -(CF₂)₃CF(CF₃)₂,-(CF₂)₄CF(CF₃)₂, -C₈F₁₇, etc.

Specific examples of the monomer (b) include, but not limited to, the following compounds:

CH₂=C(-H)-C(=O)-O-(CH₂)₂-Rf¹²

CH₂=C(-H)-C(=O)-O-C₆H₄-Rf¹²

CH₂=C(-H)-C(=O)-O-(CH₂)₂N(-CH₃) SO₂-Rf¹²

CH₂=C(-H)-C(=O)-O-(CH₂)₂N(-C₂H₅) SO₂-Rf¹²

CH₂=C(-H)-C(=O)-O-CH₂CH(-OH) CH₂-Rf¹²

CH₂=C(-H)-C(=O)-O-CH₂CH(-OCOCH₃) CH₂-Rf¹²

CH₂=C(-H)-C(=O)-O-(CH₂)₂-S-Rf¹²

CH₂=C(-H)-C(=O)-O-(CH₂)₂-S-(CH₂)₂-Rf¹²

CH₂=C(-H) -C (=O)-O-(CH₂)₃-SO₂-Rf¹²

CH₂=C(-H)-C(=O)-O-(CH₂)₂-SO₂-(CH₂)₂-Rf¹²

CH₂=C(-H)-C(=O)-NH-(CH₂)₂-Rf¹²

CH₂=C(-CH₃)-C(=O)-O-(CH₂)₂-Rf¹²

CH₂ =C(-CH₃)-C(=O)-O-C₆H₄-Rf¹²

CH₂=C(-CH₃)-C(=O)-O-(CH₂)₂N(-CH₃) SO₂-Rf¹²

CH₂=C(-CH₃)-C(=O)-O-(CH₂)₂N(-C₂H₅) SO₂-Rf¹²

CH₂=C(-CH₃)-C(=O)-O-CH₂CH(-OH) CH₂-Rf¹²

CH₂=C(-CH₃)-C(=O)-O-CH₂CH(-OCOCH₃) CH₂-Rf¹²

CH₂=C(-CH₃)-C(=O)-O-(CH₂)₂-S-Rf¹²

CH₂=C(-CH₃)-C(=O)-O-(CH₂)₂-S-(CH₂)₂-Rf¹²

CH₂=C(-CH₃)-C(=O)-O-(CH₂)₃-SO₂-Rf¹²

CH₂=C(-CH₃)-C(=O)-O-(CH₂)₂-SO₂-(CH₂)₂-Rf¹²

CH₂=C(-CH₃)-C(=O)-NH-(CH₂)₂-Rf¹²

### (c) Third monomer

The third monomer (c) is a monomer free of a fluorine atom. The third monomer (c) is an acrylic monomer having a chain hydrocarbon group having 12 to 40 carbon atoms and one ethylenically unsaturated double bond.

The chain hydrocarbon group is preferably a linear or branched hydrocarbon group. The chain hydrocarbon group is preferably an aliphatic hydrocarbon group, particularly a saturated aliphatic hydrocarbon group, and especially an alkyl group. It is preferable that the lower limit of the number of carbon atoms in the chain hydrocarbon group be 14, 16, or 18, and that the upper limit thereof be 30, 26, or 22. Specific examples of the chain hydrocarbon group are lauryl, cetyl, stearyl, and behenyl groups.

The third monomer (c) is preferably a compound represented by the formula:

CH₂=C(-X²¹)-C (=O)-Y²¹-R²¹

wherein X²¹ is a hydrogen atom, a monovalent organic group or a halogen atom,
Y²¹ is -O- or -NH-, and
R²¹ is a chain hydrocarbon group having 12 to 40 carbon atoms.

X²¹ may be a hydrogen atom, a methyl group, a halogen atom excluding a fluorine atom (particularly a chlorine atom, a bromine atom or an iodine atom), a substituted or unsubstituted benzyl group, or a substituted or unsubstituted phenyl group. A hydrogen atom, a methyl group or a chlorine atom is preferred.

The third monomer (c) may be a long chain acrylate ester monomer in which Y²¹ is -O-, or a long chain acrylamide monomer in which Y²¹ is -NH-. R²¹ is preferably a linear or branched hydrocarbon group, for example an aliphatic hydrocarbon group, particularly a saturated aliphatic hydrocarbon group, and especially an alkyl group. The number of carbon atoms in the chain hydrocarbon group is preferably 14 to 30, for example 16 to 26, and particularly 18 to 22.

Preferred specific examples of the third monomers (c) include lauryl (meth)acrylate, cetyl (meth)acrylate, stearyl (meth)acrylate, icosyl (meth)acrylate, behenyl (meth)acrylate, lauryl α-chloroacrylate, cetyl α-chloroacrylate, stearyl α-chloroacrylate, icosyl α-chloroacrylate, and behenyl α-chloroacrylate.

Preferred other specific examples of the third monomer (c) include lauryl (meth)acrylamide, cetyl (meth)acrylamide, stearyl (meth)acrylamide, icosyl (meth)acrylamide, and behenyl (meth)acrylamide.

### (d) Fourth monomer

The fourth monomer (d) is a monomer free of a fluorine atom. The fourth monomer (d) is an acrylic monomer having a cyclic hydrocarbon group having 3 to 40 carbon atoms and one ethylenically unsaturated double bond.

The cyclic hydrocarbon group may be a saturated or unsaturated, monocyclic, polycyclic, or bridged ring group, for example. The cyclic hydrocarbon group is preferably saturated. The number of carbon atoms in the cyclic hydrocarbon group is preferably 4 to 20 (for example, 6 to 15 or 6 to 10). Examples of the cyclic hydrocarbon groups include a cyclic aliphatic group having 4 to 30 carbon atoms, particularly 5 to 20 or 5 to 12 carbon atoms, an aromatic group having 6 to 20 carbon atoms, and an aromatic aliphatic group having 7 to 25 or 7 to 20 carbon atoms. The number of carbon atoms in the cyclic hydrocarbon group may be 15 or less, for example 10 or less. The carbon atom in the ring of the cyclic hydrocarbon group may be directly bonded to an ester group in the (meth)acrylate group, or may be bonded via a hydrocarbon as a spacer. The cyclic hydrocarbon group is preferably a saturated cyclic aliphatic group.

Specific examples of the cyclic hydrocarbon groups include a cyclohexyl group, a cyclopentyl group, a cyclobutyl group, a dicyclopentanyl group, a dicyclopentenyl group, an adamantly group, an isobornyl group, a naphthalene group, a bornyl group, a tricyclodecanyl group, a phenyl group, a biphenyl group, and a triphenyl group.

The fourth monomer (d) is preferably a compound represented by the formula:

CH₂=C(-X²²)-C(=O) -Y²²-R²²

wherein X²² is a hydrogen atom, a monovalent organic group or a halogen atom,
Y²² is -O- or -NH-, and
R²² is a cyclic hydrocarbon group having 3 to 40 carbon atoms.

X²² may be a hydrogen atom, a methyl group, a halogen atom excluding a fluorine atom (particularly a chlorine atom, a bromine atom or an iodine atom), a substituted or unsubstituted benzyl group, or a substituted or unsubstituted phenyl group. A hydrogen atom, a methyl group or a chlorine atom is preferred.

The fourth monomer (c) may be a long chain acrylate ester monomer in which Y²² is -O-, or a long chain acrylamide monomer in which Y²² is -NH-.

R²² is preferably a cyclic aliphatic group having 3 to 30 carbon atoms, an aromatic group having 6 to 20 carbon atoms, or an aromatic aliphatic group having 7 to 25 carbon atoms.

Specific examples of the fourth monomer (d) include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, and 2-ethyl-2-adamantyl (meth)acrylate.

### (e) Other monomer

Other monomer (e) is a monomer other than the monomers (a), (b), (c) or (d). The other monomer (e) is preferably a fluorine-free monomer.

An example of the other monomer (e) is a halogenated olefin. The halogenated olefin is free of a fluorine atom.

The halogenated olefin may be an olefin having 2 to 20 carbon atoms and substituted with 1 to 10 chlorine, bromine, or iodine atoms. The halogenated olefin is preferably a chlorinated olefin having 2 to 20 carbon atoms, particularly an olefin having 2 to 5 carbon atoms and having 1 to 5 chlorine atoms. Preferred specific examples of the halogenated olefins include halogenated vinyl compounds such as vinyl chloride, vinyl bromide and vinyl iodide, and halogenated vinylidene compounds such as vinylidene chloride, vinylidene bromide and vinylidene iodide. Vinyl chloride and vinylidene chloride are preferred in view of providing high water-repellency (particularly durability of water-repellency), and vinyl chloride is particularly preferred.

Additional examples of the other monomers (e) include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate, and a vinyl alkyl ether.

In the fluorine-containing polymer, the amount of the fluorine-containing monomer (i.e., the total amount of the first monomer (a) and the second monomer (b)) may be 10% by weight or more, for example, 40% by weight or more, relative to the fluorine-containing polymer. The amount of the fluorine-containing monomer may be 95% by weight or less, for example, 80% by weight or less, or 75% by weight or less, or 70% by weight or less, relative to the fluorine-containing polymer.

In the fluorine-containing polymer, a weight ratio between the first monomer (a) and the second monomer (b) may be 5:95 to 95:5, 10:90 to 90:10, 15:85 to 85:15, or 20:80 to 80:20. Alternatively, the weight ratio of the first monomer (a) and the second monomer (b) may be 40:60 to 90:10, 50:50 to 85:15, 55:45 to 80:20, or 60:40 to 70:30.

In the fluorine-containing polymer, the weight ratio between the third monomer (c) and the fourth monomer (d) may be 5:95 to 95:5, 10:90 to 90:10, 15:85 to 85:15, 20:80 to 80:20, 30:70 to 70:30, or 40:60 to 60:40.

In the fluorine-containing polymer,
the lower limit of the amount of the third monomer (c) may be 1 part by weight, 5 parts by weight or 10 parts by weight, and the upper limit thereof may be 300 parts by weight, 200 parts by weight or 150 parts by weight,
the lower limit of the amount of the fourth monomer (d) may be 1 part by weight, 5 parts by weight or 10 parts by weight, and the upper limit thereof may be 300 parts by weight, 200 parts by weight or 150 parts by weight, and
the lower limit of the amount of the other monomer (e) (for example, halogenated olefin) may be 0 parts by weight, 1 part by weight or 2 parts by weight, and the upper limit thereof may be 100 parts by weight, 60 parts by weight or 40 parts by weight,
per 100 parts by weight of the fluorine-containing monomers (the total amount of the first monomer (a) and the second monomer (b)).

The lower limit of the amount of the first monomer (a) may be 5% by weight, 10% by weight, 15% by weight, 20% by weight, or 22% by weight, and the upper limit thereof may be 70% by weight, 60% by weight, 55% by weight, 50% by weight, or 48% by weight,
the lower limit of the amount of the second monomer (b) may be 4% by weight, 5% by weight, 8% by weight, 10% by weight, or 11% by weight, and the upper limit thereof may be 60% by weight, 50% by weight, 40% by weight, 35% by weight, or 30% by weight,
the lower limit of the amount of the third monomer (c) may be 3% by weight, 5% by weight, 8% by weight, 9% by weight, or 10% by weight, and the upper limit thereof may be 60% by weight, 50% by weight, 40% by weight, 30% by weight, or 25% by weight,
the lower limit of the amount of the fourth monomer (d) may be 3% by weight, 5% by weight, 8% by weight, 9% by weight, or 10% by weight, and the upper limit thereof may be 60% by weight, 50% by weight, 40% by weight, 30% by weight, or 25% by weight, and
the lower limit of the amount of the other monomer (e) (for example, the total amount of the halogenated olefin and the other monomer) may be 0% by weight, 3% by weight, 8% by weight, 10% by weight, or 15% by weight, and the upper limit thereof may be 50% by weight, 40% by weight, 30% by weight, 25% by weight, or 21% by weight. It is preferable that the lower limit of the amount of the halogenated olefin is 0% by weight, 2% by weight, 7% by weight, 10% by weight, or 15% by weight, and the upper limit thereof is 50% by weight, 40% by weight, 30% by weight, 25% by weight, or 21% by weight,
relative to the total amount of the monomers (i.e., relative to the fluorine-containing polymer). Such amounts increases water-repellency in spite of the low concentration (i.e., the amount) of the fluorine-containing polymer.

The lower limit of the weight average molecular weight of the fluorine-free polymer may be 1,000, 5,000 or 10,000, and the upper limit thereof may be 10,000,000, 8,000,000, 4,000,000, 800,000 or 400,000. The weight average molecular weight is the value determined by gel permeation chromatography in terms of polystyrene.

The lower limit of the amount of the fluorine-containing polymer (solid content) may be 0.01% by weight, 0.1% by weight, 1% by weight or 5% by weight, and the upper limit thereof may be 60% by weight, 40% by weight, 35% by weight or 30% by weight, relative to the fluorine-containing composition.

The fluorine-containing polymer may be in the form of a solution dissolved in an organic solvent, but is preferably present in the form of an aqueous dispersion.

Herein, a compound that is not explicitly denoted and is simply referred to as "acrylate" or "acrylamide," includes not only a compound having a hydrogen atom at its α position, but also a compound substituted with another group (for example, a monovalent organic group including a methyl group or a halogen atom) at the α-position. Herein, the "(meth)acrylate" refers to an acrylate or methacrylate, and the "(meth)acrylamide" refers to an acrylamide or methacrylamide.

### (2) Liquid medium

The liquid medium may be an aqueous medium (water or a mixture of water and an organic solvent (water-miscible organic solvent)) or an organic solvent. The water- and oil-repellent agent is generally a solution or a dispersion. The solution is a solution in which a polymer is dissolved in an organic solvent or an aqueous medium. The dispersion is an aqueous dispersion in which a polymer is dispersed in an aqueous medium.

Examples of the organic solvents are esters (for example, esters having 2 to 40 carbon atoms, specifically, ethyl acetate and butyl acetate), ketones (for example, ketones having 2 to 40 carbon atoms, specifically, acetone, methyl ethyl ketone, and diisobutyl ketone), alcohols (for example, alcohols having 1 to 40 carbon atoms, specifically, isopropyl alcohol), aromatic solvents (for example, toluene and xylene), petroleum-based solvents (for example, alkanes having 5 to 10 carbon atoms, specifically, naphtha and kerosene), and alkyl halides (for example, alkyl halides having 1 to 40 carbon atoms, specifically, chloroform).

The liquid medium may be water singly, an organic solvent singly, or a mixture of water and a (water-miscible) organic solvent. The amount of the organic solvent may be 30% by weight or less, for example 10% by weight or less (preferably 0.1% by weight or more), relative to the liquid medium. The liquid medium is preferably water singly.

The lower limit of the amount of the liquid medium may be 30% by weight, 50% by weight or 70% by weight, and the upper limit thereof may be 99.5% by weight, 99% by weight or 95% by weight, relative to the fluorine-containing composition.

The aqueous medium may be added after the fluorine-containing polymer has been produced by polymerization. For example, a monomer is polymerized in the presence of an organic solvent to produce a fluorine-containing polymer, and water is then added thereto, followed by distilling off of the organic solvent. The organic solvent may not be distilled off. A surfactant may be added before or after polymerization, or may not be added. Even in the case of adding no surfactant, an aqueous dispersion in which the fluorine-containing polymer is well dispersed in an aqueous medium can be obtained.

### (3) Surfactant

The fluorine-containing composition may include a surfactant in the case of an aqueous dispersion. The surfactant includes at least one of a nonionic surfactant, a cationic surfactant and an anion surfactant. The surfactant may include an amphoteric surfactant. The surfactant may not be included.

In a case in which the fluorine-containing composition is in the form of an aqueous dispersion, it generally contains a surfactant. In the case in which the fluorine-containing composition is in the form of an aqueous solution, it is generally free of a surfactant.

The nonionic surfactant is a nonionic surfactant having an oxyalkylene group. The number of carbon atoms of the alkylene group in the oxyalkylene group is preferably 2 to 10. Preferably the number of oxyalkylene groups in a molecule of the nonionic surfactant is generally 2 to 100. The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), an alkylene oxide adduct of acetylene glycol, etc. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer).

The nonionic surfactant preferably has a structure that does not contain an aromatic group, in view of environmental issues (biodegradability, environmental hormones, etc.).

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride.

Specific examples of the cationic surfactant include dodecyl trimethyl ammonium acetate, trimethyl tetradecyl ammonium chloride, hexadecyl trimethyl ammonium bromide, trimethyl octadecyl ammonium chloride, (dodecyl methyl benzyl) trimethylammonium chloride, benzyl dodecyldimethylammonium chloride, methyl dodecyldi(hydropolyoxyethylene) ammonium chloride, benzyl dodecyldi(hydropolyoxyethylene) ammonium chloride, and N-[2-(diethylamino)ethyl]oleamide hydrochloride.

Examples of the anionic surfactant include a fatty acid salt (the number of carbon atoms of the fatty acid is, for example, 8 to 30), sulfonate (for example, alkyl sulfonate, alkyl benzene sulfonate (the number of carbon atoms of the alkyl group is, for example, 8 to 30)), and sulfate salt (for example, alkyl sulfate salt (the number of carbon atoms of the alkyl group is, for example, 8 to 30)).

Examples of the anionic surfactant include sodium lauryl sulfate, triethanolamine lauryl sulfate, sodium polyoxyethylene lauryl ether sulfate, sodium polyoxyethylene nonylphenyl ether sulfate, triethanolamine polyoxyethylene lauryl ether sulfate, sodium cocoyl sarcosine, sodium N-cocoyl methyl taurate, sodium polyoxyethylene coconut alkyl ether sulfate, sodium diether hexyl sulfosuccinate, sodium α-olefin sulfonate, sodium lauryl phosphate, and sodium polyoxyethylene lauryl ether phosphate.

Examples of the amphoteric surfactant includes alanines, imidazolinium betaines, amido betaines, and betaine acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine.

The nonionic surfactants, cationic surfactants, anionic surfactants, and amphoteric surfactants each may be used singly or in combination of two or more thereof.

The surfactant is preferably an anionic surfactant and/or a nonionic surfactant. A combination of the anionic surfactant and the nonionic surfactant is preferable.

In the present disclosure, even in the case of using no surfactant, a dispersion of the fluorine-containing polymer, particularly an aqueous dispersion thereof, can be formed.

The amount of the surfactant may be 0.1 to 50 parts by weight, for example 1 to 30 parts by weight, per 100 parts by weight of the fluorine-containing polymer (or the total of monomers).

### [Method of producing a fluorine-containing polymer]

The fluorine-containing polymer in the present disclosure can be produced by any of the usual polymerization methods, and conditions of the polymerization reaction can also be selected as desired. Such polymerization methods include solution polymerization, suspension polymerization, and emulsion polymerization.

For the solution polymerization, a method is employed that includes dissolving the monomers in an organic solvent in the presence of a polymerization initiator, followed by nitrogen purge, and then heating and stirring the mixture at a temperature in the range of 30 to 120°C for 30 minutes to 48 hours, for example 3 to 24 hours. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount ranging from 0.01 to 20 parts by weight, for example, from 0.01 to 10 parts by weight, per 100 parts by weight of the monomers.

The organic solvent may be a solvent that is inactive to monomers and used for dissolving them, and for example, it may be esters (for example, esters having 2 to 30 carbon atoms, specifically, ethyl acetate and butyl acetate), ketones (for example, ketones having 2 to 30 carbon atoms, specifically, methyl ethyl ketone and diisobutyl ketone), or alcohols (for example, alcohols having 1 to 30 carbon atoms, specifically, isopropyl alcohol). Specific examples of the organic solvents include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in an amount ranging from 10 to 2,000 parts by weight, for example, 50 to 1,000 parts by weight, per 100 parts by weight of the total amount of monomers.

For emulsion polymerization, a method is employed that includes emulsifying the monomers in water in the presence of a polymerization initiator and an emulsifier, followed by nitrogen purge, and then polymerizing the monomers under stirring at 50 to 80°C for 30 minutes to 48 hours, for example, 3 to 24 hours. Examples of the polymerization initiator to be used include water-soluble initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine dihydrochloride, azobisisobutyronitrile, sodium peroxide, potassium persulfate, and ammonium persulfate, and oil-soluble initiators such as azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount in the range of 0.01 to 10 parts by weight per 100 parts by weight of the monomers.

For obtaining a polymer aqueous dispersion excellent in the stability when left stand, it is desirable that the monomers be micronized into fine particles in water by using an emulsification apparatus that can impart powerful pulverizing energy, such as a high-pressure homogenizer or ultrasonic homogenizer, and then polymerized. Various anionic, cationic, or nonionic emulsifiers can also be used as the emulsifier, and they are used in an amount in the range of 0.5 to 20 parts by weight per 100 parts by weight of the monomers. The anionic and/or nonionic and/or cationic emulsifiers are preferably used. If the monomers are not completely blended with each other, a compatibilizer that enables these monomers to be sufficiently blended is preferably added, including a water-soluble organic solvent or a monomer with low molecular weight. The addition of the compatibilizer enables improvement in emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, and ethanol, and they may be used in an amount in the range of 1 to 50 parts by weight, for example, 10 to 40 parts by weight, per 100 parts by weight of water. Examples of the monomer with low molecular weight include methyl methacrylate, glycidyl methacrylate, and 2,2,2-trifluoroethyl methacrylate, and they may be used in an amount in the range of 1 to 50 parts by weight, for example, 10 to 40 parts by weight, per 100 parts by weight of the total amount of the monomers.

A chain transfer agent may be used in the polymerization. The molecular weight of the polymer can be changed according to the amount of the chain transfer agent used. Examples of the chain transfer agent include mercaptan group-containing compounds such as lauryl mercaptan, thioglycol, and thioglycerol (in particular alkyl mercaptan (for example, having 1 to 30 carbon atoms)), and inorganic salts such as sodium hypophosphite and sodium hydrogen sulfite. The amount of the chain transfer agent used may be in the range of 0.01 to 10 part by weight, for example, 0.1 to 5 parts by weight, relative to 100 parts by weight of the total amount of the monomers.

The fluorine-containing polymer is preferably produced by emulsion polymerization or solution polymerization.

After the production of the fluorine-containing polymer by polymerization, water (or an aqueous medium) is preferably added to disperse the fluorine-containing polymer in water.

Water (or aqueous medium) may be added after the fluorine-containing polymer has been produced by the polymerization. For example, the monomer are polymerized in the presence of an organic solvent to produce the fluorine-containing polymer, and then water may be added to the polymer mixture, followed by distilling off the organic solvent, to thereby disperse the fluorine-containing polymer in water. The organic solvent may not be distilled off. A surfactant may be added before or after polymerization, or may not be added. A favorable aqueous dispersion can be obtained even without the addition of the surfactant.

The fluorine-containing composition may contain (4) a curing agent (active hydrogen reactive compound or active hydrogen-containing compound). In general, the curing agent (4) is added after the fluorine-containing polymer has been produced.

### (4) Curing agent

The fluorine-containing composition may include a curing agent (crosslinking agent) so that the fluorine-containing polymer is favorably cured. Since a fluorine-free crosslinkable (meth)acrylate or (meth)acrylamide monomer is an active hydrogen-containing monomer or an active hydrogen reactive group-containing monomer, the fluorine-containing polymer has an active hydrogen or active hydrogen-reactive group. The curing agent is an active hydrogen reactive compound or active hydrogen-containing compound so that it reacts with the active hydrogen or active hydrogen-reactive group of the fluorine-containing polymer.

Examples of the active hydrogen-reactive compound include a polyisocyanate compound, an epoxy compound, a chloromethyl group-containing compound, a carboxyl group-containing compound, and a hydrazide compound.

Examples of the active hydrogen-containing compound include a hydroxyl group-containing compound, an amino group-containing compound and a carboxyl group-containing compound, a ketone group-containing compound, a hydrazide compound, and a melamine compound.

The amount of the curing agent may be 100 parts by weight or less, for example, 0.01 to 30 parts by weight, per 100 parts by weight of the fluorine-containing polymer.

The curing agent is preferably a polyisocyanate compound.

The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,3-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4''-triisocyanate, and 4,4'-diphenylmethane-2,2',5,5'-tetraisocyanate.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same liquid (aqueous solution) as that of the fluorine-containing composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound.

The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compound include chloromethyl polystyrene.

The carboxyl group-containing compound is a compound having a carboxyl group. Examples of the carboxyl group-containing compound include (poly)acrylic acid, and (poly)methacrylic acid.

The ketone group-containing compound is a compound having a ketone group. Examples of the ketone group-containing compound include (poly)diacetone acrylamide and diacetone alcohol.

The hydrazide compound is a compound having a hydrazide group. Examples of the hydrazide compound include hydrazine, carbohydrazide, and adipic acid hydrazide.

Examples of the melamine compound include a melamine resin and a methyl etherified melamine resin.

### (5) Other component

The fluorine-containing composition may include other component (5) than the components (1) to (4) described above.

Generally, other component (5) is added after production of the fluorine-containing polymer.

The lower limit of the amount of other component may be 0.1 parts by weight, 0.5 parts by weight, 1 part by weight, 5 parts by weight or 10 parts by weight, and the upper limit thereof may be 1,000 parts by weight, 500 parts by weight, 100 parts by weight, 50 parts by weight or 20 parts by weight, per 100 parts by weight of the fluorine-containing polymer.

Examples of other components (5) include water- and/or oil- repellent agents, anti-slip agents, antistatic agents, antiseptic agents, ultraviolet absorbers, antibacterial agents, deodorants, perfumes, penetrating agent, reactive silicone components, and silicone resins. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl)piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU FHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Water- and/or oil-repellent agent)

Examples of the water- and/or oil-repellent agent include saturated or unsaturated hydrocarbon compounds, and silicone-based compounds. The water- and/or oil-repellent agent may be a non-fluorine agent. The saturated or unsaturated hydrocarbon-based compounds are preferably saturated hydrocarbons. The number of carbon atoms of the saturated or unsaturated hydrocarbon-based compound may be 15 or more and preferably 20 to 300, for example, 25 to 100. Specific examples of the saturated or unsaturated hydrocarbon-based compounds include paraffins. Examples of the silicone-based compound include silicones, and siloxane group-containing acrylic polymers. These may be used singly or in combination of two or more thereof.

### (Anti-slip agent)

Examples of the anti-slip agent include resins, such as a urethane resin, acrylic resin, silicones (reactive silicone, silicone resin, and the like), and a combination of these resins, and inorganic particles (which may undergo hydrophobic surface treatment), such as aluminum compounds (for example, alumina), silicon compounds (for example, silica), and titanium compounds. These may be used singly or in combination of two or more thereof.

### (Antistatic agent)

Examples of the antistatic agent include cationic antistatic agents with cationic functional groups such as quaternary ammonium salts, pyridinium salts, primary-, secondary-, and tertiary-amino groups; anionic antistatic agents with anionic functional groups such as sulfonic acid salts or sulfuric acid ester salts, phosphonic acid salts, phosphoric acid ester salts; amphoteric antistatic agents such as alkyl betaine and derivatives thereof, imidazoline and derivatives thereof, alanine and derivatives thereof, and nonionic antistatic agents such as amino alcohols and derivatives thereof, glycerin and derivatives thereof, and polyethylene glycol and derivatives thereof. The antistatic agent may be an ion-electric conductive polymer obtained by polymerizing or copolymerizing a monomer having these cationic, anionic or amphoteric ion-electric conductive groups. These may be used singly or in combination of two or more thereof.

### (Antiseptic agent)

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol. The content of antiseptic agent is preferably 0.0001 to 1% by weight relative to the total weight of the fluorine-containing composition. When the content of antiseptic agent is the lower limit value of the aforementioned range or more, a sufficient effect of antiseptic agent added is obtained, and when the content is the upper limit value or less, favorable storage stability of the fluorine-containing composition is obtained.

### (Ultraviolet absorber)

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Antibacterial agents)

The antibacterial agent is a component that exhibits the effect of inhibiting bacteria from growing on fibers and further exhibits the effect of inhibiting generation of unpleasant odors derived from decomposition products of microorganisms. Examples of the antibacterial agent include cationic bactericidal agents such as quaternary ammonium salts (excluding component (A)), zinc bis-(2-pyridylthio-1-oxide), polyhexamethylene biguanidine hydrochloride, 8-oxyquinoline, and polylysine.

### (Deodorants)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### (Perfume)

The perfumes are not limited, and a list of usable perfume materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Penetrating agent)

Examples of the penetrating agent include, but not limited to, an alcohol, an anionic surfactant, a nonionic surfactant, a cationic surfactant, and an amphoteric surfactant, and specific examples of the penetrating agent include an alcohol having an alkyl group having 1 to 10 carbon atoms, and a polyoxyethylene alkyl ether. The penetrating agents may be used singly or in combination of two or more thereof. The concentration of the penetrating agent is preferably 0.01 to 1.0% by weight in a treating agent composition for hydrophobic substrates (100% by weight). In view of achieving both penetrability into a hydrophobic substrate and water-repellency and alcohol-repellency, the concentration of the penetrating agent is more preferably 0.1 to 0.5% by weight.

### (Reactive silicone component)

The fluorine-containing composition may contain a reactive silicone component in view of its functional improvements. Examples of the reactive silicone component include polysiloxanes having a reactive group on a side chain, at one terminal, at each of both terminals, or on a side chain and each of both terminals, and a polysiloxane having a reactive group on a side chain and/or at each of both terminals is preferable in view of excellent slippage properties as well as antifouling properties (SR properties) at the same time. The reactive silicone component is not limited as long as it has a reactive group in its molecule, and examples thereof include an amino-modified silicone, epoxy-modified silicone, carboxy-modified silicone, and methyl hydrogen silicone.

Examples of the amino-modified silicone include those having a structure in which an amino group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. The amino group may be any of a primary amino group, secondary amino group, or tertiary amino group. Examples of the organic group to which an amino group is bonded include: a 2-aminoethyl group, N-methyl-2-aminoethyl group, N,N-dimethyl-2-aminoethyl group, N-ethyl-2-aminoethyl group, N,N-diethyl-2-aminoethyl group, N,N-methylethyl-2-aminoethyl group, 3-aminopropyl group, N-methyl-3-aminopropyl group, N,N-dimethyl-3-aminopropyl group, N-ethyl-3-aminopropyl group, N,N-diethyl-3-aminopropyl group, and N,N-methylethyl-3-aminopropyl group. These functional groups may be on a side chain of a polysiloxane or at the terminal thereof.

Examples of the epoxy-modified silicone include those having a structure in which an epoxy group is bonded to an organic group directly connected to a silicon atom. The organic group may be either an alkylene group or a divalent aromatic group. The epoxy group in this case usually bonds to the organic group to form a glycidyl ether. Examples of such a functional group include a 3-glycidoxypropyl group and 2-glycidoxyethyl group. These functional groups may be on a side chain of a polysiloxane or at the terminal thereof.

Examples of the carboxy-modified silicones include those having a structure in which a carboxy group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. Examples of such a functional group include a 3-carboxypropyl group and 2-carboxyethyl group. These functional groups may be on a side chain of a polysiloxane or at the terminal thereof.

The methyl hydrogen silicone is silicone in which a side chain of a polydiorganosiloxane is partially substituted with hydrogen and the hydrogen atom is directly connected to a silicon atom. In using the methyl hydrogen silicones, a catalyst may be used in order to improve their reactivity. For example, zinc, tin, manganese, cobalt, iron, and amine-based catalysts can be used. These catalysts are preferably organic acid metal salts, and the organic acid is preferably a fatty acid. In view of safety, zinc stearate and the like can be used. The amount of the catalyst used is preferably 10 to 40% relative to the methyl hydrogen silicone in view of facilitating exhibiting the effect. Two or more types of amino-modified, epoxy-modified, and carboxy-modified silicones and the methyl hydrogen silicones may be mixed. Preferably, all of the silicones have reactive groups and are those having film formability. The film formability means that after the silicone in an emulsion state is adhered to a fiber surface, the silicone forms a solid film and does not become an oil or gel.

### (Silicone resin)

The fluorine-containing composition may contain a silicone resin in view of functional improvement. The silicone resin is a silicone resin composed of at least one selected from a R₃SiO_{1/2} unit (M unit), RSiO_{3/2} unit (T unit), and SiO_{4/2} unit (Q unit), wherein R is a linear or branched monovalent alkyl group having 1 to 18 carbon atoms; provided that silicone resins composed only of the M unit and those composed only of the Q unit are excluded. A silicone resin is preferably a resin that is free of a R₂SiO_{2/2} unit (D unit) in view of exhibiting the effect of the present invention.

The silicone resin is preferably in a sol state. Examples of R include a methyl group, ethyl group, propyl group, isopropyl group, butyl group, isobutyl group, hexyl group, octyl group, 2-ethylhexyl group, decyl group, cetyl group, and stearyl group. In view of stability in a case in which silicone resin is in a sol state, and availability and price of materials, R is preferably a methyl group, and in particular, 90% or more of all of R is preferably methyl groups. Different types of groups may be used as R in combination.

The R₂SiO_{2/2} unit (D unit) contained in the silicone resin may impair low slippage properties of a water-repellent agent. Moreover, a silicone resin composed only of the Q unit can prevent water repellent performance as a water-repellent agent.

Examples of the structure of the silicone resin include silicone resins composed of (i) a M unit and Q unit, (ii) a M unit, T unit and Q unit, (iii) a M unit and T unit, (iv) a T unit and Q unit, and (v) only a T unit, and it may preferably be a silicone resin composed of (i) a M unit and Q unit and a silicone resin composed of (v) only a T unit. The molar ratio of M units to Q units (M/Q) in a silicone resin composed of (i) a M unit and Q unit is preferably M/Q = 0.6 to 1.3, and more preferably M/Q = 0.8 to 1.1. Two or more types of these silicone resins may be used in combination.

Silicone resin can also contain a constituent unit containing a hydroxyl group bonded to a silicon atom. Specific examples thereof include a (HO)RSiO_{2/2} unit, (HO)₂RSiO_{1/2} unit, (HO)SiO_{3/2} unit, (HO)₂SiO_{2/2} unit, and (HO)₃SiO_{1/2} unit, and one or more of the hydroxyl groups may be replaced with an alkoxy group represented by an RO group.

A sol containing the silicone resin can be obtained by a production method in which an organodisiloxane and tetraalkoxysilane and their partial hydrolytic condensation products are homogeneously dispersed and polymerized in water containing a surfactant, as described in JP 3852921B, or by a production method in which the silane compound described below is hydrolyzed in water.

A production method for hydrolyzing a silane compound in water will be described in detail. Any silane compound can be used as a starting material for the production as long as it has a chloro- or alkoxy-type hydrolyzable group, contains one, three or four hydrolyzable groups, and has an alkyl group that satisfies the aforementioned conditions. Specific examples of the silane compound that can be used include, but not limited to, tetrachlorosilane, tetramethoxysilane, tetraethoxysilane, tetrabutoxysilane, methyltrichlorosilane, methyltrimethoxysilane, methyltriethoxysilane, methyltriisopropoxysilane, methyltributoxysilane, ethyltrichlorosilane, ethyltrimethoxysilane, ethyltriethoxysilane, propyltrichlorosilane, propyltrimethoxysilane, propyltriethoxysilane, iosopropyltrichlorosilane, isopropyltrimethoxysilane, isopropyltriethoxysilane, butyltrichlorosilane, butyltrimethoxysilane, butyltriethoxysilane, isobutyltrichlorosilane, isobutyltrimethoxysilane, isobutyltriethoxysilane, hexyltrichlorosilane, hexyltrimethoxysilane, hexyltriethoxysilane, 2-ethylhexyltrichlorosilane, 2-ethylhexyltrimethoxysilane, 2-ethylhexyltriethoxysilane, decyltrichlorosilane, decyltrimethoxysilane, decyltriethoxysilane, cetyltrichlorosilane, cetyltrimethoxysilane, cetyltriethoxysilane, stearyltrichlorosilane, stearyltrimethoxysilane, stearyltriethoxysilane, trimethylchlorosilane, trimethylmethoxysilane, trimethylethoxysilane, trimethylisopropoxysilane, dimethylethylchlorosilane, dimethylethylmethoxysilane, dimethylethylethoxysilane, dimethylpropylchlorosilane, dimethylpropylmethoxysilane, dimethylpropylethoxysilane, dimethylisopropylchlorosilane, dimethylisopropylmethoxysilane, dimethylisopropylethoxysilane, dimethylhexylchlorosilane, dimethylhexylmethoxysilane, dimethylhexylethoxysilane, dimethyldecylchlorosilane, dimethyldecylmethoxysilane, dimethyldecylethoxysilane, dimethylcetylchlorosilane, dimethylcetylmethoxysilane, dimethylcetylethoxysilane, dimethylstearylchlorosilane, dimethylstearylmethoxysilane, dimethylstearylethoxysilane, and partial hydrolysates thereof. In terms of handling, facilitation of removal of byproducts and availability of the material, methoxysilane or ethoxysilane is more preferably used. One of these silane compounds or a mixture of two or more thereof may be used.

As the methods for hydrolyzing silane compounds in water, any of general methods usually known can be employed. Specifically, they are a method in which a hydrolysis reaction is carried out while a silane compound is added dropwise into water, and a method in which water and the silane compound are mixed in batch followed by carrying out a hydrolysis reaction.

Upon carrying out the hydrolysis reaction, a hydrolysis catalyst may be used. Conventional known catalysts can be used as the hydrolysis catalyst, and acidic or alkaline catalysts are suitably used. For acidic catalysts, hydrogen halide, carboxylic acid, sulfonic acid, acidic or slightly acidic inorganic salts, and solid acids such as ion exchange resins are preferred. For alkaline catalysts, sodium hydroxide, potassium hydroxide, alkali metal salts such as sodium carbonate, potassium carbonate, and sodium hydrogen carbonate, alkali metal silanolates such as sodium silanolate and potassium silanolate, amines such as triethylamine, diethylamine and aniline, and ammonia water can be used, for example. The amount of catalyst added is preferably adjusted so that a pH of an aqueous solution is 2 to 7 or 7 to 12. After the reaction is completed, a neutralizing agent may be added to neutralize the acidic or alkaline catalyst, as necessary.

A surfactant may be added to the aqueous solution in order to disperse the silane compound and a hydrolysis reaction product in water. The surfactant is not limited. For example, anionic surfactants such as an alkyl sulfate, alkyl benzene sulfonate, and alkyl phosphate, nonionic surfactants such as a polyoxyethylene alkyl ether, polyoxyethylene oxypropylene alkyl ether, polyoxyethylene alkyl phenyl ether, and polyoxyethylene fatty acid ester, cationic surfactants such as a quaternary ammonium salt and alkylamine acetate, and amphoteric surfactants such as an alkyl betaine and alkyl imidazoline can be used. These may be used singly or in combination of two or more thereof. A surfactant that exhibits acidity or alkalinity can be used also as a hydrolysis catalyst. The amount of surfactant added is not limited, and is preferably 1 to 50 parts by weight per 100 parts by weight of the silane compound. The amount less than 1 part by weight fails to exhibit a sufficient effect of addition of the surfactant, and the amount more than 50 parts by weight has a likelihood of impairing water-repellency of the water-repellent agent.

A hydrolysis catalyst and surfactant may be added to a mixture of water and the silane compound as necessary, and the hydrolysis reaction can be carried out at 0 to 90°C for 10 minutes to 24 hours. Thereafter, a neutralization reaction can be carried out as necessary, and a silicone resin can be thus obtained. By-products produced in the hydrolysis reaction, such as alcohols and neutralizing salts, can be removed by distillation under reduced pressure or filtration. Various additives can be added to this silicone resin. For example, an antiseptic agent and thickener can be added according to purposes.

The fluorine-containing composition of the present disclosure may be in the form of a solution, emulsion (particularly, an aqueous dispersion) or aerosol, and is preferably an aqueous dispersion. The fluorine-containing composition includes the polymer (active ingredient) and a medium (particularly, a liquid medium, such as an organic solvent and/or water). The amount of the medium may be, for example, 5 to 99.9% by weight and particularly 10 to 80% by weight, relative to the fluorine-containing composition.

In the fluorine-containing composition, the concentration of the polymer may be 0.01 to 95% by weight, for example, 5 to 50% by weight.

The fluorine-containing composition of the present disclosure can be applied to an object to be treated by conventional and known method. Usually, a method is employed that includes dispersing and diluting the fluorine-containing composition in an organic solvent or water, and adhering it to a front side of the object to be treated by a known method such as dip coating, spray coating, or foam coating, followed by drying. It may also be applied together with an appropriate crosslinking agent (curing agent) and cured, if necessary. Furthermore, additives such as an insect repellent, softening agent, antibacterial agent, flame retarder, antistatic agent, paint fixative, and wrinkle-resistant agent can be added to the fluorine-containing composition of the present disclosure and used in combination therewith. The concentration of the polymer in the treatment liquid to be brought in contact with a textile product may be 0.01 to 10% by weight (particularly in the case of dip coating), for example, 0.05 to 10% by weight.

Examples of the treatment target treated with the fluorine-containing composition of the present disclosure (for example, the water- and oil-repellent agent) include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof.

The textile product may be in any form of fibers, fabrics, or the like.

The fluorine-containing composition of the present disclosure can also be used as an internal mold release agent or external mold release agent.

The polymer can be applied to the textile products by any of the methods known for treating textile products (for example, fabrics) with liquids. The textile product may be immersed in a solution, or the solution may be adhered to or sprayed on the textile product. The treated textile product is dried and subjected to curing, preferably by heating, in order to develop water- and oil-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the polymer may be applied to the textile product by a cleaning method, for example, in laundry application or dry cleaning methods.

The textile products to be treated are typically fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The fluorine-containing composition of the present disclosure is particularly effective in rendering synthetic fibers hydrophobic and water-repellent. The method of the present disclosure generally renders textile products hydrophobic and water-repellent.

Examples of fibers constituting the textile product include natural, synthetic, semi-synthetic, regenerated, and inorganic fibers. Fibers may be used singly or in combination of two or more thereof.

Examples of the natural fibers include cellulosic fibers such as cotton, flax, and wood pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying a treating agent (the fluorine-containing composition or diluted liquid thereof) to an object to be treated by dipping, spraying, or coating, for etc. The treatment allows the polymer as an active ingredient of the treating agent to penetrate inside of the object to be treated and/or to adhere to a front side of the object to be treated.

### Examples

The present disclosure will be specifically illustrated below by way of Examples, however, Examples do not restrict the present disclosure.

Hereinbelow, parts, %, and a ratio mean parts by weight, % by weight, and a weight ratio, respectively, unless otherwise specified.

Procedures of tests are as described below.

### Shower water-repellency test

A shower water-repellency test was performed according to JIS-L-1092. A result of the shower water-repellency test is represented by the water-repellency No. (as shown in Table 1 below).

A glass funnel with a volume of at least 250 ml and a spray nozzle capable of spraying 250 ml of water for 20 to 30 seconds is used. A specimen frame is a metal frame with a diameter of 15 cm. Three specimen sheets with a size of approximately 20 cm × 20 cm, are provided and the sheet is fixed to a specimen holder frame so that it is wrinkle-free. The center of the spray is positioned in the center of the sheet. Water at room temperature (250 mL) is poured in the glass funnel and sprayed to the specimen sheet (over a period of 25 to 30 seconds). The holding frame is removed from the stand, one end of the holding frame is grasped with the front surface down, and the opposite end is lightly tapped with a hard substance. The holding frame is further rotated 180°, and the same procedure is repeated to remove excess water droplets. The wet specimen is compared to a wet comparison standard to score a grade of 0, 50, 70, 80, 90, and 100, in order of water-repellency from poorest to best. The results are obtained from an average of triplicate measurements.

**[Table 1]**

| Water-repellency No. | State |
|---|---|
| 100 | No wet or water droplets adhered on the front side |
| 90 | No wet but small water droplets adhered on the front side |
| 80 | Wet in the form of separate small water droplets on the front side |
| 70 | Wet on half of the front side and the separate small wet penetrated the fabric |
| 50 | Wet on the entire front side |
| 0 | Wet on the entire front side and the entire back side |

### Production Example 1

A 1,000 mL autoclave was charged with 44 g of CF₃CF₂-(CF₂CF₂)ₙ-CH₂CH₂OCOC(Cl)=CH₂ (n=2.0) (13FClA), 12 g of CF₃CF₂-(CF₂CF₂)ₙ-CH₂CH₂OCOCH=CH₂ (n=2.0) (13FA), 20 g of isobornyl methacrylate (IBMA), 4 g of stearyl acrylate (StA), 400 g of pure water, 56 g of a water-soluble glycolic solvent, 1.56 g of an alkyl dimethyl ammonium chloride, and 16.1 g of a polyoxyethylene alkyl ether, and the mixture was emulsified and dispersed by ultrasonication at 60°C for 15 minutes under stirring. After purging the inside of the flask with nitrogen, the flask was filled with 20 g of vinyl chloride (VCM) under pressure, and 0.4 g of an azo group-containing water-soluble initiator was added. The resulting mixture was reacted at 60°C for 20 hours to obtain an aqueous dispersion of a polymer. The composition of the polymer was almost identical to the composition of the monomers charged.

### Production Examples 1 to 6 and Comparative Production Examples 1 to 7

A polymer dispersion was obtained in the same manner as in Production Example 1, except that the monomers listed in Table 2 were used. The composition of the polymer was almost identical to the composition of the monomers charged.

### Example 1

The aqueous liquid produced in Production Example 1 was diluted with pure water so that the concentration of the fluorine-containing polymer was 30% in terms of solid content, and then the 30% diluted liquid was further diluted with water to 5% to prepare a 5.00% test solution (100 g). 10 PET (PolyEthylene Terephthalate) fabrics (500 mm × 200 mm) and Nylon fabrics (500 mm × 200 mm), were continuously immersed in the test solution, then passed through a mangle, and treated through a pin tenter at 170°C for 1 minute. Similarly, the aqueous liquid was diluted with pure water so that the concentration of the fluorine-containing polymer was 30% in terms of solid content, and then the 30% diluted liquid was further diluted with water to 1%. PP (Poly Propylene) fabrics (500 mm × 200 mm) were immersed, then passed through a mangle, and treated through a pin tenter at 135°C for 30 seconds. Thereafter, the PET fabric and Nylon fabric were each subjected to a shower water-repellency test, an oil-repellency test, and their washing durability test, while the PP nonwoven fabric was subjected to water-repellency tests (shower water-repellency test, water-repellency test (IPA), IPR test, and water pressure resistance test). The results are shown in Table 2.

### Examples 2 to 6 and Comparative Production Examples 1 to 7

The same procedure as in Example 1 was carried out, except that the dispersions of the polymers obtained in Examples 2 to 6 and Comparative Production Examples 1 to 7 were used instead of the dispersion of the polymer obtained in Production Example 1. The results are shown in Table 2.

**[Table 2]**

| | | | | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|---|---|
| | | | | 1 | 2 | 3 | 4 | 5 | 6 | 1 | 2 | 3 | 4 | 5 | 6 | 7 |
| | | | | Production Example 1 | Production Example 2 | Production Example 3 | Production Example 4 | Production Example 5 | Production Example 6 | Comparative Production Example 1 | Comparative Production Example 2 | Comparative Production Example 3 | Comparative Production Example 4 | Comparative Production Example 5 | Comparative Production Example 6 | Comparative Production Example 7 |
| Monomer | 13FCLA | | | 44 | 27.5 | 40 | 40 | 45 | 40 | 44 | 27.5 | 27.5 | 56 | | | 30 |
| | 13FA | | | 12 | 27.5 | 15 | | 15 | **15** | 12 | 27.5 | 27.5 | | 56 | | |
| | 13FMA | | | | | | 15 | | | | | | | | 56 | |
| | IBMA | | | 20 | 15 | 10 | 10 | 20 | 30 | | | 25 | | | | 40 |
| | StA | | | 4 | 10 | 15 | 15 | 20 | 5 | 24 | **25** | | 24 | 24 | 24 | 30 |
| | VCM | | | 20 | 20 | 20 | 20 | | 10 | 20 | 20 | 20 | 20 | 20 | 20 | |
| Total | | | | 100 | 100 | 100 | 100 | 100 | 100 | 100 | 100 | 100 | 100 | 100 | 100 | 100 |
| Fabric used | | Repellent agent concentration | | | | | | | | | | | | | | |
| PET 170°C × Cure for 1 minute | Spray | 0.3 | | 85 | 80 | 85 | 85 | 85 | 85 | 75 | 75 | 75 | 80 | 70 | 70 | 70 |
| | | 0.6 | | 100 | 90 | 90 | 90 | 90 | 95 | 90 | 85 | 85 | 85 | 80 | 80 | 90 |
| | | 1.0 | | 100 | 100 | 100 | 100 | 100 | 100 | 100 | 90 | 90 | 100 | 80 | 80 | 100 |
| | | 2.0 | | 100 | **100** | 100 | 100 | 100 | 100 | 100 | 100 | 90 | 100 | 90 | 100 | 100 |
| | | | | | | | | | | | | | | | | |
| Nylon 170°C × Cure for 1 minute | Spray | 0.3 | | 80 | 80 | 85 | 85 | 85 | 85 | 75 | 75 | 75 | 80 | 70 | 70 | 70 |
| | | 0.6 | | 90 | 85 | 90 | 95 | 90 | 90 | 90 | 80 | 80 | 80 | 80 | 80 | 90 |
| | | 1.0 | | 100 | 100 | 100 | 100 | 100 | 100 | 90 | 90 | 90 | 90 | 80 | 80 | 100 |
| | | 2.0 | | 100 | 100 | 100 | 100 | **100** | 100 | 100 | 100 | 90 | 100 | 90 | 90 | 100 |

### Industrial Applicability

The fluorine-containing composition of the present disclosure is used for a surface treatment agent. The fluorine-containing composition can be used as a water-repellent agent, an oil-repellent agent, a soil resistant agent, a soil release agent, a release agent, or a mold release agent.

## Claims

1. A fluorine-containing polymer, having repeating units formed of
(a) a first monomer that is a fluorine-containing acrylic monomer having a chlorine atom at the α-position;
(b) a second monomer that is a fluorine-containing acrylic monomer having a hydrogen atom or an organic group at the α-position;
(c) a third monomer that is an acrylic monomer having a chain hydrocarbon group having 12 to 40 carbon atoms; and
(d) a fourth monomer that is an acrylic monomer having a cyclic hydrocarbon group having 3 to 40 carbon atoms.

2. The fluorine-containing polymer according to claim 1, wherein a weight ratio between the third monomer (a) and the fourth monomer (b) is 5:95 to 95:5.

3. The fluorine-containing polymer according to claim 1 or 2, wherein
the first monomer (a) is a compound represented by the formula:
CH₂=C(-X¹¹)-C(=O)-Y¹¹-Z¹¹-Rf ¹¹
wherein X¹¹ is a halogen atom,
Y¹¹ is -O- or -NH-,
Z¹¹ is a direct bond or a divalent organic group, and
Rf¹¹ is a fluoroalkyl group having 1 to 20 carbon atoms,
the second monomer (b) is a compound represented by the formula:
CH₂=C(-X¹²)-C(=O)-Y¹²-Z¹²-Rf¹²
wherein X¹² is a hydrogen atom or a monovalent organic group,
Y¹² is -O- or -NH-,
Z¹² is a direct bond or a divalent organic group, and
Rf¹² is a fluoroalkyl group having 1 to 20 carbon atoms,
the third monomer (c) is a compound represented by the formula:
CH₂=C(-X²¹)-C(=O)-Y²¹-R²¹
wherein X²¹ is a hydrogen atom, a monovalent organic group or a halogen atom,
Y²¹ is -O- or -NH-, and
R²¹ is a chain hydrocarbon group having 12 to 40 carbon atoms, and
the fourth monomer (d) is a compound represented by the formula:
CH₂=C(-X²²)-C(=O)-Y²²-R²²
wherein X²² is a hydrogen atom, a monovalent organic group or a halogen atom,
Y²² is -O- or -NH-, and
R²² is a cyclic hydrocarbon group having 3 to 40 carbon atoms.

4. The fluorine-containing polymer according to any one of claims 1 to 3, wherein
the monovalent organic group is an alkyl group having 1 to 4 carbon atoms,
the divalent organic group is a linear or branched alkylene group having 1 to 20 carbon atoms, and
the cyclic hydrocarbon group having 3 to 40 carbon atoms is a cyclic aliphatic group having 4 to 30 carbon atoms, an aromatic group having 6 to 20 carbon atoms, or an aromatic aliphatic group having 7 to 25 carbon atoms.

5. The fluorine-containing polymer according to any one of claims 1 to 4, wherein
the third monomer (c) is at least one long chain acrylate ester monomer selected from the group consisting of lauryl (meth)acrylate, cetyl (meth)acrylate, stearyl (meth)acrylate, icosyl (meth)acrylate, behenyl (meth)acrylate, lauryl α-chloroacrylate, cetyl α-chloroacrylate, stearyl α-chloroacrylate, icosyl α-chloroacrylate, and behenyl α-chloroacrylate, or
at least one long chain acrylamide monomer selected from the group consisting of lauryl (meth)acrylamide, cetyl (meth)acrylamide, stearyl (meth)acrylamide, icosyl (meth)acrylamide, and behenyl (meth)acrylamide, and
the fourth monomer (d) is at least one compound selected from the group consisting of cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, and 2-ethyl-2-adamantyl (meth)acrylate.

6. The fluorine-containing polymer according to any one of claims 1 to 5, wherein an amount of the first monomer (a) is 5 to 70% by weight, an amount of the second monomer (b) is 4 to 60% by weight, an amount of the third monomer (c) is 3 to 60% by weight, and an amount of the fourth monomer (d) is 3 to 60% by weight, relative to the fluorine-containing polymer.

7. The fluorine-containing polymer according to any one of claims 1 to 6, wherein
the fluorine-containing polymer has a repeating unit formed of (e) other monomer than the monomers (a), (b), (c) or (d), and
the other monomer (e) is a halogenated olefin.

8. The fluorine-containing polymer according to claim 7, wherein an amount of the other monomer (e) is 0 to 50% by weight.

9. A fluorine-containing composition, comprising
(1) the fluorine-containing polymer according to any one of claims 1 to 8, and
(2) a liquid medium.

10. The fluorine-containing composition according to claim 9, wherein the liquid medium (2) is an organic solvent, or water, an organic solvent or a mixture of water and an organic solvent.

11. The fluorine-containing composition according to claim 9 or 10, wherein
the fluorine-containing composition is an aqueous dispersion in which the polymer is dispersed in water or a mixture of water and an organic solvent, and
the fluorine-containing composition comprises (3) a surfactant.

12. The fluorine-containing composition according to any one of claims 9 to 11, wherein the fluorine-containing composition is a water-repellent agent, an oil-repellent agent, a soil resistant agent, a soil release agent, a release agent, or a mold release agent.

13. A treated object, wherein the fluorine-containing polymer according to any one of claims 1 to 8 is adhered thereto.
